# EUROPEAN PATENT SPECIFICATION

(11) **EP 0 521 657 B1**
(45) Date of publication and mention of the grant of the patent: **13.08.1997**
(21) Application number: 92305858.0
(22) Date of filing: 25.06.1992
(51) Int. Cl.: E04B 1/86

(54) **Sound absorbent material**
Schallabsorbierendes Material
Matériau absorbant le son

(30) Priority: 03.07.1991 GB 9114408
(43) Date of publication of application: 07.01.1993
(73) Proprietor: HUNTER DOUGLAS INDUSTRIES B.V., NL-3071 EL Rotterdam (NL)
(72) Inventor: Rijnders, Willem, NL-3352 XH Papendrecht (NL)
(74) Representative: Allen, William Guy Fairfax

(56) References cited:
- EP-A- 0 411 287
- WO-A-88/10154
- GB-A- 2 063 960
- GB-A- 2 133 431
- NL-A- 8 303 106

## Description

The present invention relates to a sound absorbent material which may, for example, be used in the fabrication of building panels for uses such as ceiling and partition panelling.

GB-A-2133431 (Schmidt, HJ) relates to a building panel or metal strip material therefor comprising an apertured rigid panel body covered with a porous fabric.

The problem experienced while bonding such porous fabric to a painted metal substrate is that the adhesive material tends to clog the pores of the fabric material which adversely affects the acoustic properties.

There is also a problem that the adhesive if applied to any excessive quantities shows through the fabric and contaminates the apertures in the perforated sheet metal.

Several methods of applying adhesive (commonly of the hot-melt type) have been tried, but none so far has been found entirely satisfactory. It has been generally found that applying adhesive in an open pattern of beads or dots provides adequate bonding of a particular fabric or fibrous material without unduly reducing porosity.

One technique for obtaining an open adhesive pattern is disclosed in WO 88-10154 (Nordson Corp.) and has been applied to moisture absorbing laminates.

This method provides for a plurality of convoluting beads in a side by side arrangement, each bead being constrained to a predetermined width so as to form a multiple of adjacently spaced spray patterns.

The efficiency of thin layer materials in providing sound absorbing qualities has been attributed to the airflow resistance through such material. However, the low weight of the material requires it to be firmly attached around the apertures of a rigid panel body to obtain the best results.

GB-A-2063960 discloses sound absorbent material comprising a substantially rigid panel body having a plurality of apertures therein and defining a predetermined aperture density and a relatively thin layer of porous fabric applied to said rigid panel body in such a manner that it overlies the apertures therein, said porous fabric having a pore density that is substantially smaller than the aperture density, the fabric there being bonded to the panel body.

The sound absorption provided shows some improvement over the prior art but there is plenty of scope for improvement.

The present invention is characterized by the features of claim 1.

With such a structure the sound absorbing effects are much improved because it is possible to use far less adhesive than is necessary in GB-A-2063960.

The term "rigid body panel" is to be read to include any form of such panel material including building panels which may be used as ceiling panels or in partitioning, as well as her panels such as sheets, tiles or planks.

By adaptation of the density of the adhesive spray pattern and the bead thickness it has proven possible to achieve the desired adhesive density for bonding porous sound absorbent substrates to perforated panel material without loss of acoustic properties.

This has been achieved by positioning the tracks of convoluting beads more closely together while arranging for a small uncovered area between adjacent beads.

The substrate may be of a substantially rigid material. The fabric, on the other hand, should be relatively thin and porous, a particularly suitable material being sold by the firm Carl Freudenberg under the trade designation of VILEDON C 1986.

For secure adhesion of the fabric, the number and width of said tracks is such that the tracks account for from 62 to 87 percent, of the width of the fabric.

Preferably, the fabric has a resistance to airflow of over 100 NS/m³ (DIN 52213).

In one form, the apertures in said panel body are formed as circular holes of 1 mm diameter, spaced at 2 mm in a triangular pattern.

Preferably, the porous fabric is a non-woven type fibrous substrate, more particularly, one whose substrate comprises randomly arranged cellulose and glass fibre with a synthetic resin binder, having a resistance to airflow of at least 140 NS/m³ (DIN 52213).

A suitable hot-melt type of adhesive has a viscosity of less than 1800 cP (centi Poise) at temperatures above the softening point.

Preferably, the overall adhesive density is less than 15 g/m² (gram per square meter) of fabric.

In order that the present invention may more readily be understood, the following description is given, merely by way of example, reference being made to the accompanying drawings in which:-
Figure 1 shows, somewhat schematically, part of one embodiment of sound absorbent building panel embodying the present invention; and
Figure 2 shows the open convoluting swirl track pattern which a hot-melt adhesive spray machine was programmed to follow in order to lay out the adhesive bead track pattern used in the production of the panel of Figure 1. The track pattern of Fig. 2 does not show overlapping circles or spirals.

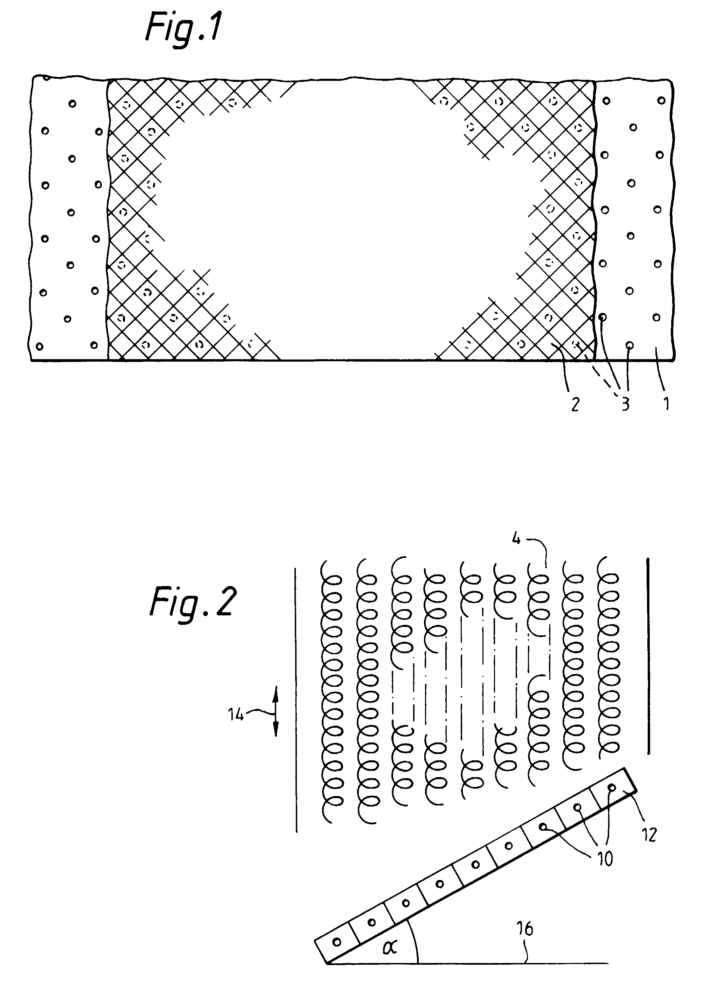

Before describing the manner of production of the panel of Figure 1, its structure will be briefly described.

The panel is formed from a metallic substrate 1 having slots or apertures 3 therein and a non-woven fabric 2 applied to one or more of its major faces in such a manner that the fabric 2 lies on the substrate 1 in a stretched and non-detachable manner at all locations and is stretched over the slots or apertures 3. The non-woven fabric produces in the region of the apertures in the panel an increased resistance to air flow and thereby produces the desired sound absorbability of the panel or panel material. The substrate may be of metal, wood, cardboard or plastics and the fabric 2 woven, knitted or non-woven.

The equipment used was obtained from Nordson but is used in a modified set-up to achieve a smaller spacing of the adjacent tracks.

The panel illustrated is formed as follows:-

First, the apertures or slots 3 are formed, e.g., by stamping, in the case of a sheet metal substrate, and then the surface of the substrate is prepared (if necessary, or desirable, having regard to its material) for example by application of a layer of paint in the case of sheet metal.

Hot-melt adhesive is then applied to the surface of the fabric 2 (or substrate 1) by spraying using a machine of the type described in the Nordson Publication WO 8810154.

The track pattern of the adhesive beads laid down by the spraying machine is shown in Figure 2. It will be seen that there are a number of closely spaced tracks 4 parallel to an edge of the substrate, each track 4 corresponding to the path described by an adhesive bead being rotatingly deposited about the centre line of the track while translating the centre of rotation at a constant linear velocity; the relationship between the linear velocity and the rotational velocity of the spray head is such as to produce the open convoluting swirl track areas as shown in Figure 2. The spray nozzles are shown as a plurality of nozzles 10 mounted on a spray bar 12 which is movable back and forth over the substrate 1, along a path indicated by the double arrows 14. It will be seen that the spray bar 12 is inclined at an angle α to a line 16 perpendicular to the direction of movement 14 of the spray bar 12.

It will be noted that there are several open convoluting swirl tracks 4, one for each spray nozzle. It has been found that a satisfactory density of adhesive can be provided if these tracks 4 do not overlap, thus ensuring that the adhesive does not have any excessive build-up. The spacing of the tracks 4 can be adjusted by adjusting the angle α of the spray bar 12 carrying the nozzles 10.

The rotating effect can be achieved by rotating the nozzle itself and/or by rotating an annular stream of gas (usually air) around the stream of adhesive leaving each nozzle. The rotational direction of the nozzles and/or air streams can be the same from one to the next or can, for example, alternate from one direction to the opposite.

Once the adhesive has been applied, the fabric is pressed, in a suitably tensioned state firmly against the substrate and maintained in that condition while the adhesive cures or sets.

It has been found that with the panel, strip or sheet material of the invention, the efficiency of thin layer porous fabric materials in providing sound absorption depends largely on the airflow resistance through such materials. Being of low weight, satisfactory results can only be obtained if the non-woven sound absorbing fabric is firmly attached around the apertures of the perforated panel, strip or sheet.

Achieving an adequate adhesive bond in volume production, has previously presented problems in that the adhesive not only tends to clog the pores of the non-woven, but also shows through and contaminates the apertures in the perforated strip. It has proved extremely difficult if not impossible to confine the adhesive to the areas between the apertures of the strip.

With the open convoluting or swirl pattern of overlapping circles the structure of the invention has proven successful in avoiding excessive build-up of adhesive while making the best possible use of the sound absorbing properties available in the fabric, e.g., a non-woven fabric by adequate density of bonding.

## Claims

1. A sound absorbent material comprising a substantially rigid panel (1) having a plurality of apertures (3) therein and defining a predetermined aperture density and a relatively thin layer of porous fabric (2) applied to said rigid panel in such a manner that it overlies the apertures (3) therein, said porous fabric (2) having a pore density that is substantially smaller than the aperture density in the panel, and said fabric being secured to said panel (1) by means of adhesive material, characterized in that the adhesive is applied in an open convoluting swirl pattern forming an array of overlapping circles or spirals along multiple adjacent non-overlapping longitudinal tracks (4) whose number and width are such that the tracks account for from 62 to 87 percent of the width of the fabric; in that successive circles or spirals in the longitudinal direction of said track overlap one another in an amount of 14 to 60 percent of their dimension in said longitudinal direction; in that the adhesive is applied as a bead having a thickness not exceeding 0.035 mm; and in that the arrangement, size and number of apertures in said panel are in a ratio of 10 to 30 percent of the total surface.

2. Material according to claim 1, wherein the fabric has a resistance to airflow of over 100 Ns/m³.

3. Material according to either of the preceding claims, wherein the adhesive is a hot-melt type of adhesive.

4. Material according to claim 3, wherein the hot-melt type of adhesive has a viscosity of less than 1800 cP (centiPoise) at temperatures above the softening point.

5. Material according to any one of the preceding claims, wherein the apertures in said panel are formed as circular holes of 1 mm diameter, spaced at 2 mm in a triangular pattern.

6. Material according to any one of the preceding claims, wherein the overall adhesive density is less than 15 g/m² (gram per square meter) of fabric.

7. Material according to any one of the preceding claims, wherein the porous fabric is a non-woven type of fibrous substrate.

8. Material according to claim 7, wherein the non-woven fibrous substrate comprises randomly arranged cellulose and glass fibres with a synthetic resin binder having a resistance to airflow of at least 140 Ns/m³.

## Patentansprüche

1. Schalldämpfendes Material, das eine im wesentlichen starre Tafel (1) mit mehreren darin angeordneten öffnungen (3) von vorbestimmter Öffnungsdichte sowie eine relativ dünne Lage eines porösen textilen Flächengebildes (2) umfaßt, das auf dieser starren Tafel so aufgebracht ist, daß es über deren öffnungen (3) liegt, wobei die Porendichte dieses porösen textilen Flächengebildes (2) im wesentlichen kleiner als die Dichte der Öffnungen in der Tafel und das textile Flächengebilde mit der Tafel (1) mittels eines Klebstoffs verbunden ist,
**dadurch gekennzeichnet,**
**daß** der Auftrag dieses Klebstoffs in einem offenen, wirbelförmig verschlungenen Muster erfolgt, das aus einer Anordnung einander überlappender Kreise oder Spiralen entlang mehrerer nebeneinanderliegender, einander jedoch nicht überlappender Längsbahnen (4) besteht, wobei die Anzahl und Breite dieser Bahnen so gewählt wird, daß sie 62 - 87 Prozent der Breite des textilen Flächengebildes ausmachen, daß sich aufeinanderfolgende Kreise oder Spiralen in Längsrichtung der Bahn um 14 - 60 Prozent ihrer Ausdehnung in dieser Längsrichtung überschneiden, daß der Klebstoff in Form einer Raupe von max. 0,035 m Dicke aufgetragen wird, und daß die Anordnung, Größe und Anzahl der Öffnungen in der Tafel so gewählt sind, daß sie in einem Verhältnis von 10 - 30 Prozent zur Gesamtfläche stehen.

2. Material gemäß Anspruch 1, wobei das textile Flächengebilde einen Luftwiderstand von über 100 Ns/m³ aufweist.

3. Material gemäß einem der vorstehenden Ansprüche, wobei es sich bei dem Klebstoff um einen Heißkleber handelt.

4. Material gemäß Anspruch 3, wobei der Heißkleber bei Temperaturen unterhalb des Erweichungspunktes eine Viskosität von unter 1800 cP aufweist.

5. Material gemäß einem der vorstehenden Ansprüche, wobei die Öffnungen in der Tafel als kreisrunde Löcher von 1 mm Durchmesser ausgebildet und in einem Dreiecksmuster in Abständen von 2 mm zueinander angeordnet sind.

6. Material gemäß einem der vorstehenden Ansprüche, wobei die Gesamtdichte des Klebstoffes unter 15 g pro m² textilen Flächengebildes beträgt.

7. Material gemäß einem der vorstehenden Ansprüche, wobei es sich bei dem porösen textilen Flächengebilde um ein aus Fasern bestehendes Trägermaterial nach Art eines Textilverbundmaterials handelt.

8. Material gemäß Anspruch 7, wobei das aus Fasern bestehende Trägermaterial nach Art eines Textilverbundmaterials regellos angeordnete Zellulose- und Glasfasern enthält, die in einem Kunstharz gebunden sind, und einen Luftwiderstand von mindestens 140 Ns/m³ aufweist.

## Revendications

1. Matériau d'isolation phonique comprenant un panneau sensiblement rigide (1) comportant une multitude d'ouvertures (3) et définissant une densité donnée des ouvertures et une couche relativement fine de textile poreux (2) appliquée audit panneau rigide d'une manière telle qu'elle recouvre les ouvertures (3), ledit textile poreux (2) ayant une densité des pores qui est sensiblement inférieure à la densité des ouvertures du panneau, et ledit textile étant fixé audit panneau (1) au moyen d'un matériau adhésif, caractérisé en ce que l'adhésif est appliqué dans un motif de spires ouvertes formant un réseau de cercles ou de spirales se chevauchant suivant de multiples pistes longitudinales contiguës ne se chevauchant pas (4) dont le nombre et la largeur sont tels que les pistes constituent de 62 à 87 pour cent de la largeur du textile; en ce que des cercles ou des spirales successives dans la direction longitudinale de ladite piste se chevauchent les uns les autres dans une quantité de 14 à 60 pour cent de leur cote dans la direction longitudinale; en ce que l'adhésif est appliqué sous forme d'un bourrelet ayant une épaisseur ne dépassant pas 0,035 mm et en ce que l'agencement, les dimensions et le nombre des ouvertures ménagées dans ledit panneau sont dans le rapport de 10 à 30 pour cent de la surface totale.

2. Matériau selon la revendication 1, dans lequel le textile présente une résistance à un courant d'air supérieure à 100 NS/m³.

3. Matériau selon l'une ou l'autre des revendications précédentes, dans lequel l'adhésif est un type d'adhésif à fusion à chaud.

4. Matériau selon la revendication 3, dans lequel le type d'adhésif à fusion à chaud a une viscosité inférieure à 1800 cP (centipoises) à des températures supérieures au point de ramollissement.

5. Matériau selon l'une quelconque des revendications précédentes, dans lequel les ouvertures ménagées dans ledit panneau sont réalisées en trous circulaires de 1 mm de diamètre, espacés les uns des autres de 2 mm dans un motif triangulaire.

6. Matériau selon l'une quelconque des revendications précédentes, dans lequel la densité globale de l'adhésif est inférieure à 15 g/m² (gramme par mètre carré) du textile.

7. Matériau selon l'une quelconque des revendications précédentes, dans lequel le textile poreux est un type non-tissé de substrat fibreux.

8. Matériau selon la revendication 7, dans lequel le substrat fibreux non-tissé comprend des fibres de cellulose et de verre disposées aléatoirement avec un liant en résine synthétique ayant une résistance à un courant d'air d'au moins 140 Ns/m³.
